# EUROPEAN PATENT APPLICATION

(11) **EP 2 200 302 A1**
(43) Date of publication of application: **23.06.2010**
(21) Application number: 07845890.8
(22) Date of filing: 11.12.2007
(51) Int. Cl.: H04N 7/08

(54) **A METHOD FOR UPDATING AND TRANSMITTING ELECTRONIC SERVICE GUIDE**

(30) Priority: 10.09.2007 CN 200710148085
(71) Applicant: ZTE Corporation, Shenzhen, Guangdong 518057 (CN)
(72) Inventor: KE, Zunyou, Guangdong 518057 (CN)
(74) Representative: Ilgart, Jean-Christophe
(86) International application number: PCT/CN2007/003534
(87) International publication number: WO 2009/033338

(57) **Abstract**

A method for updating and transmitting Electronic Service Guide ESG, wherein the method includes the following steps: step 1, constructing ESG a data block according to a predefined rule, and establishing a data block identifier corresponding to the ESG data blocks; step 2, adding description information of the ESG data block to an ESG basic description information table, and the description information includes a data block identifier, a version number of the data block and an ESG service identifier; and step 3, upon transmitting the ESG data block, finding the ESG service identifiers corresponding to the ESG data block from the ESG basic description table, and transmitting the ESG data block via a service multiplex subframe corresponding to the ESG service identifier. Therefore, according to the invention, it is convenient for the terminal to realize the updating of the ESG data. And the amount of the receiving and updating data is reduced, and it is easier for the terminals to receive and update the ESG data.

## Description

### Field of the Invention

The present invention relates to mobile multimedia broadcast technology, in particular to a method for updating and transmitting the Electronic Service Guide (ESG) schedule information.

### Background of the Invention

The ESG or electronic program guide is an information navigation system for multimedia broadcast service. Via the ESG information, users can learn about the related information (including service name, the time of broadcast, content outline, price, etc.) of mobile multimedia broadcast service, and search, preview and access the service rapidly; the ESG provides the users with a good navigation mechanism for watching TV programs and enjoying information service, therefore the users can find the programs which the users are interested in and look up the attached information of the programs conveniently and rapidly .

Such functions of the ESG enable the client terminal to become an important way and tool for the users to watch programs. It is necessary for the ESG to provide value-added services so as to fully take advantage of ESG user groups and thus bring a lot of income to the operators. As the amount of the ESG information being increasing, it is an important trend to organize and schedule the ESG information efficiently.

Generally, the data information to be sent via broadcast for the ESG, i.e., ESG broadcast data, can be divided into a plurality of data blocks on demand. These data blocks are classified according to the ESG data types, including service information, schedule information, program content information, and service parameter information, etc. The updating operation of the terminal can be performed according to the acquirable variation of a data block version number.

Even the data blocks are classified according to the ESG data types, the data amount of the data blocks formed by some types of the ESG data information is still huge, e.g., the schedule information. Since the information actually needs to be accommodated by the data block comprises the program information of up to tens of channels for several days, the number of the records can be tens of thousands pieces, and thus it is difficult for the terminals to update the local ESG data information.

### Summery of the Invention

With respect to the above problems, the present invention proposes a method for updating and transmitting the schedule information of the ESG, in which updating the schedule information of the ESG is realized by altering the basic description table of the ESG schedule information.

The present invention provides a method for updating and transmitting the ESG comprising the following steps: step 1, constructing an ESG data block according to a predefined rule and establishing a data block identifier corresponding to the ESG data block; step 2, adding description information of the ESG data block to an ESG basic description table; and step 3, upon transmitting the ESG data block, finding the ESG service identifiers corresponding to the ESG data block from the ESG basic description table, and transmitting the ESG data block via a service multiplex subframe corresponding to the ESG service identifiers.

Wherein, the predefined rule comprises ESG data types. If the ESG data is schedule information, then the predefined rule is start time information of the ESG schedule information. The ESG schedule information has corresponding schedule information type identifier.

The description information of the ESG data block comprises an ESG data type identifier, an ESG schedule information data block identifier, an ESG data block version number and an ESG service identifier, wherein, the ESG data type identifier represents the type of the ESG data, the ESG service identifier represents the identifier of the ESG service for the assigning rule complying with the multiplexing regulation, the ESG schedule information data block version number represents the current version number of the ESG schedule information data block, and when the ESG schedule information data block is updated, the ESG schedule information data block version number is incremented by 1, the ESG schedule information data block identifier together with the schedule information type identifier uniquely determines one ESG schedule information data block.

In the present invention, the service multiplex frame is a multiplex frame with a non-zero multiplex frame identifier in the mobile multimedia broadcast channel frames. The multiplex subframe of the service multiplex frame is consisted of a subframe head, a video segment, an audio segment, and a data segment, wherein, the data segment comprises a data segment head and a plurality of data units, the data segment head describing the parameter of each data unit.

The data unit is consisted of a data head, a data payload and cyclic redundancy code verification data. The data head comprises the ESG schedule information data block identifier and schedule information type identifier corresponding to the data payload.

Therefore, the present invention is helpful for the terminal to realize the ESG data updating operation conveniently, reduce the data amount to be received and updated, and easily receive completely and update the data. Especially, the present invention has substantial advantages in a common case when part of the schedule data information changes while the majority does not change.

Other features and advantages of the present invention will be described in the following description, and be partly clear from the description, or be understood by implementing the present invention. The objects and other advantages of the present invention can be realized and obtained from the specification, claims and the structures specially indicated by the drawings.

### Brief Description of the Drawings

Drawings are provided for the further understanding of the present invention and form a part of the specification, which are used to explain the present invention together with the embodiments of the present invention rather than to limit the present invention, wherein,
Fig.1 is a flow chart showing the method for updating and transmitting the ESG according to the present invention;
Fig.2 is a schematic view of the frame structure of mobile multimedia broadcast channel according to an embodiment of the present invention;
Fig.3 is a structure diagram showing the ESG basic description table of mobile multimedia broadcast according to an embodiment of the present invention;
Fig.4 is a schematic view showing the service multiplex subframe structure of mobile multimedia broadcast according to an embodiment of the present invention;
Fig.5 is a schematic view showing the ESG data unit structure of mobile multimedia broadcast according to an embodiment of the present invention; and
Fig.6 is a schematic view showing the partition rule of the schedule information data block according to an embodiment of the present invention.

### Detailed Description of the Embodiments

The preferred embodiments will be described in connection with the drawings. It shall be understood that the preferred embodiments described herein are provided only for illustrating and explaining the present invention but not for limiting the present invention.

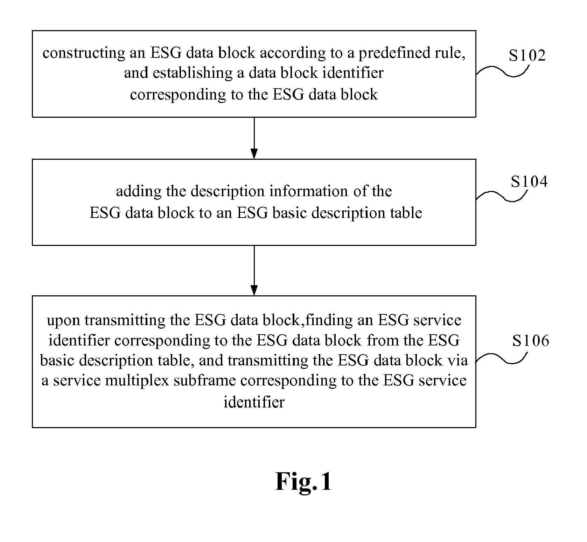

Fig.1 is a flow chart showing the method for updating and transmitting the ESG according to the present invention. As shown in Fig.1, the method comprises the following steps:
step 102, constructing an ESG data block according to a predefined rule and establishing data block identifiers corresponding to the ESG data block;
step 104, adding description information of the ESG data block to an ESG basic description table; and
step 106, upon transmitting the ESG data block, finding the ESG service identifiers corresponding to the ESG data block from the ESG basic description table, and transmitting the ESG data block via a service multiplex subframe corresponding to the ESG service identifiers.

Wherein, the predefined rule comprises the ESG data types. If the ESG data is schedule information, then the predefined rule is start time information of the ESG schedule information. The ESG schedule information has corresponding schedule information type identifier.

The description information of the ESG data block comprises an ESG data type identifier, an ESG schedule information data block identifier, an ESG data block version number and an ESG service identifier, wherein, the ESG data type identifier represents the type of the ESG data, the ESG service identifier represents the identifier of the ESG service for the assigning rule complying with the multiplexing regulation, the ESG schedule information data block version number represents the current version number of the ESG schedule information data block, and when the ESG schedule information data block is updated, the ESG schedule information data block version number is increment by 1, the ESG schedule information data block identifier together with the schedule information type identifier uniquely determines one ESG schedule information data block.

In the present invention, the service multiplex frame is a multiplex frame with a non-zero multiplex frame identifier in the mobile multimedia broadcast channel frames. The multiplex subframe of the service multiplex frame is consisted of a subframe head, a video segment, an audio segment, and a data segment, wherein, the data segment comprises a data segment head and a plurality of data units, the data segment head describing the parameter of each data unit.

The data unit is consisted of a data head, a data payload and cyclic redundancy code verification data. The data head comprises the ESG schedule information data block identifier and schedule information type identifier corresponding to data payload.

In the mobile multimedia broadcast system, an ESG block is first formed according to the given rules; the ESG data information is partitioned according to the rules and the corresponding relationship with the data block identifier is established. The rules comprise: partitioning the data block according to the ESG data type, which corresponds to the data type identifier of the ESG data information package structure. The rules also comprise: partitioning the schedule information by time period according to the start time information of schedule.

Then, the ESG basic description table comprises respective the ESG data block version numbers and the ESG service identifiers; the description table comprises respective ESG data type identifiers, data block identifiers, and data block version numbers. The ESG basic description table can be indexed to correlate with the ESG service identifier used by the data block, so as to give a prompt to a terminal to rapidly find the corresponding multiplex frame and receive the ESG data block. The data type identifier identifies the type of the ESG data table carried by the ESG data payload. The data block identifier identifies the data block to which the ESG data payload belongs, and uniquely determines one data block together with data type identifier. The data block version number represents the current version number of the data block and is incremented by one when a change occurs to the data block. The ESG service identifier represents the identifier of the ESG service, the assigning rule complying with the multiplexing regulation.

At last, the ESG data block is transmitted by the service multiplex frame of the ESG service identifier; the mobile multimedia broadcast channel frame is composed of several multiplex frames. The multiplex frame is consisted of a multiplex frame head, a multiplex frame payload, and a filling part. Each multiplex frame is uniquely identified by an MF_ID which has a value range of 0 - 39, wherein the multiplex frame with MF_ID == 0 is used to carry the control information, and other frames are used to carry service.

The filling part is filled with 0xFF. The multiplex frame payload is consisted of one or more multiplex subframes. The multiplex frame with MF_ID == 0 is used to carry control information (simply referred as control multiplex frame), and transmitted via control logic channel, at this point, a control information table is used as a multiplex subframe. The multiplex frame with MF_ID != 0 is used to carry service (simply referred as service multiplex frame), and one service corresponds to one multiple subframe.

Further, the multiplex subframe of the service multiplex frame is consisted of a subframe head, a video segment, an audio segment and a data segment. The data segment is consisted of a data segment head and a plurality of data units, where the data segment head describes the parameters of respective data units. Wherein, the type of the data unit with a value 0 means that the information transmitted by the data unit is the ESG data information. Furthermore, the ESG data unit is consisted of a data head, a data payload, and CRC verification data. Wherein, the data head comprises the data block identifier and data type identifier corresponding to the data payload.

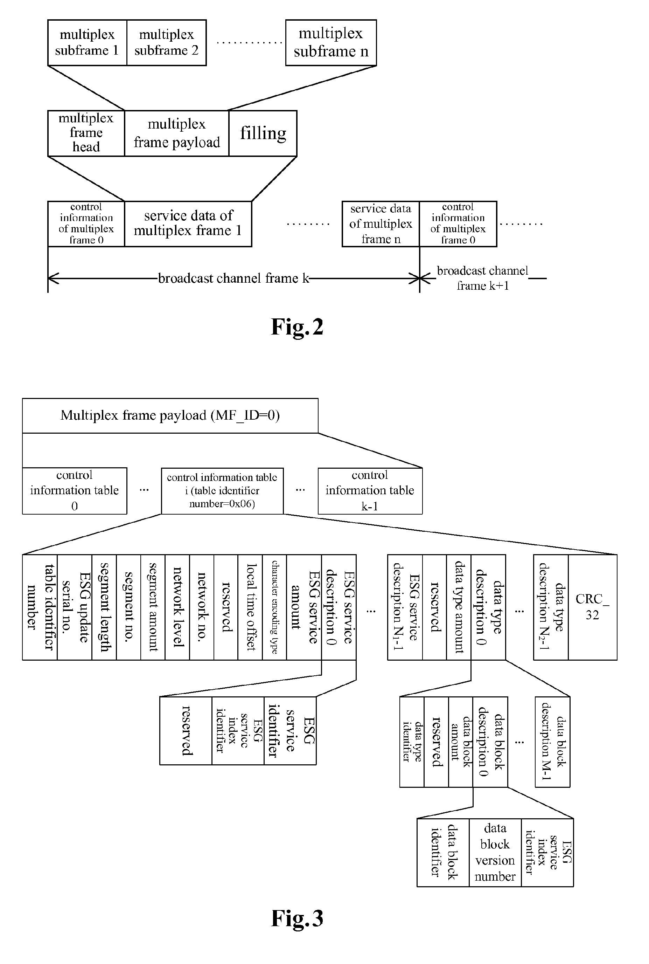

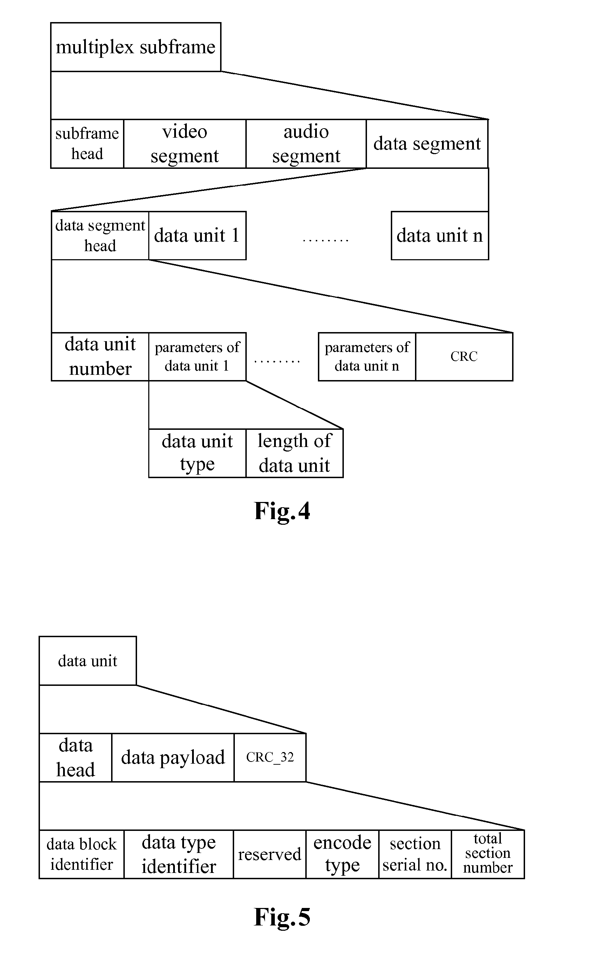

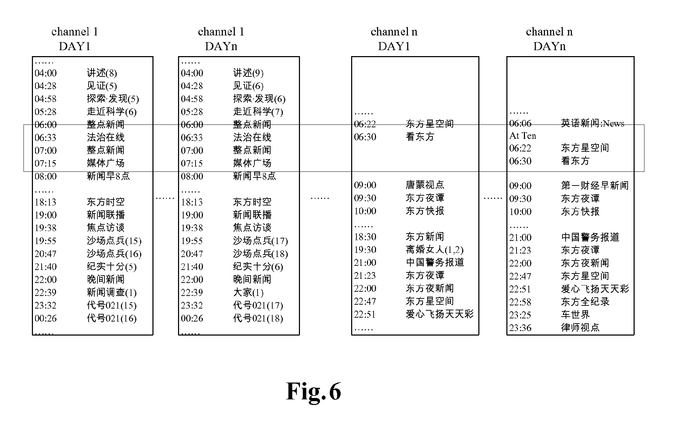

Fig.2 is a schematic view of the frame structure of mobile multimedia broadcast channel according to the embodiment of the present invention; Fig.3 is a structure diagram showing the ESG basic description table of mobile multimedia broadcast according to the embodiment of the present invention; Fig.4 is a schematic view showing the service multiplex subframe structure of mobile multimedia broadcast according to the embodiment of the present invention; Fig.5 is a schematic view showing the ESG data unit structure of mobile multimedia broadcast according to the embodiment of the present invention; and Fig.6 is a schematic view showing the partition rule of the schedule information data block according to the embodiment of the present invention. The technical solution and embodiments of the present invention are described with the drawings as follows.

As shown in Fig.2, the broadcast channel frame of mobile multimedia broadcast is consisted of several multiplex frames. The mobile multimedia broadcast channel frame is consisted of several multiplex frames. Each multiplex frame is uniquely identified by the MF_ID with a value range of 0 - 39, wherein the multiplex frame with MF_ID==0 is used to carry control information (simply referred as control multiplex frame), other multiplex frames are used to carry service (simply referred as service multiplex frame). The multiplex frame is consisted of a multiplex frame head, a multiplex frame payload, and a filling part. The filling part is filled with 0xFF. The multiplex frame payload is consisted of one or more multiplex subframes.

As shown in Fig.3, the ESG basic description table is transmitted via the control multiplex frame. The multiplex frame with MF_ID == 0 is used to carry control information (simply referred as control multiplex frame) and transmitted via control logic channel, at this point, a control information table is used as a multiplex subframe.

That is to say, the control multiplex frame payload is consisted of several control information tables which comprise the ESG basic description table with a table identifier of 0x06.

The description table comprises the data type identifier, the data block identifier and the data block version number of each ESG, and can be indexed to correlate with the ESG service identifier used by the data block, so as to give a prompt to a terminal to rapidly find the corresponding multiplex frame and receive the ESG data block.

The data type identifier, a 4-bit field, identifies the type of the ESG data table carried by the ESG data payload, as shown in Table 1.

**Table 1 The ESG Data Type**

| Value (b3b2b1b0) | Type |
|---|---|
| 0000 | Reserved |
| 0001 | Service |
| 0010 | Service Extension |
| 0011 | Schedule |
| 0100 | Content |
| 0101 | Service Parameter |
| 0110 ∼ 1111 | Reserved |

The data block identifier, an 8-bit field, identifies the data block to which the ESG data payload belongs and uniquely determines one data block together with the data type identifier. The data version number, a 4-bit field, represents the current version number of the data block and is incremented by one when a change occurs to the data block.

The ESG service identifier, a 16-bit field, represents the identifier of the ESG service and the multiplex norm that allocating rules should comply with, as listed in Table 2.

**Table 2 The Assignment of the Service Identifier**

| Service Identifier Value | Assignment |
|---|---|
| 0x0000 to 0x003F | Reserved |
| 0x0040 to 0x00FF | Persistent Service, only for the ESG |
| 0x0100 to 0x01FF | Reserved |
| 0x0200 to 0x3FFF | Persistent Service |
| 0x4000 to 0x7FFF | Short Period Service |
| 0x8000 to 0xFFFF | Reserved |

As shown in Fig.4, the logic structure of the service multiplex subframe of mobile multimedia broadcast is illustrated.

The multiplex subframe of the service multiplex frame is consisted of a subframe head, a video segment, an audio segment, and a data segment. The data segment comprises a data segment head and a plurality of data units, where the data segment head describes the parameter of each data unit. Wherein, the data unit type with a value of 0 represents that the information transmitted by the data unit is the ESG data information.

The ESG broadcast data and the service channel data are both transmitted through the segments of various types of the multiplex subframes of respective service multiplex frame payload. Generally, the service channels and the ESG data information are transmitted through different multiplex subframes and multiplex frames.

As shown in Fig.5, the ESG data unit structure comprises a data head, a data payload, and CRC verification data. Wherein the data head comprises the data block identifier and data type identifier corresponding to the data payload. For the schedule information, the data type identifier is 0011 (binary) with reference to Table 1.

So far, various types of the ESG data information can be transmitted to the terminal through the service multiplex frames. As described above, even the data blocks are partitioned according to the ESG data types, the data amount of data blocks formed by some data types of the ESG data information is still huge, such as the schedule information. Since the information actually needs to be accommodated by the data block comprises the program information of up to tens of channels for several days, the number of the records can be tens of thousands pieces, and thus it is difficult for the terminals to update the local ESG data information..

As shown in Fig.6, the method of the present invention further refines the partition of the data block of the ESG schedule information.

In the figure, every 2 hours are set as one time period comprising all the channels of the ESG assigned time period (i.e., transmitting the ESG data information of several days), the identifier is numbered to correspond to the data block identifier, for which an agreement is managed between the network side and the terminal side.

For example, the schedule of the first day is numbered in time order:
The identifier of the data blocks scheduled between 0:00 (including 0:00) - 1:00 is 1;
The identifier of the data blocks scheduled between 2:00 (including 2:00) - 3:00 is 2;
and so on. The identifier of the data blocks scheduled between 6:00 (including 6:00) - 7:00 is 4 in the figure.

When we send the program data of one week, the number starts from the first day (such as Monday) and the used data block identifier number will be 1 to 12, and those for the second day will be 13 to 24,..., those for the seventh day will be 73 to 84. Thus, after the terminal has received the schedule data block needs to be updated, the local data of corresponding time period can be replaced for the update for sure. Of course, the scheduled data information is not restricted to the start time and schedule name illustrated in the figure. All contents of one schedule information can be found with reference to the Schema in Table 3.

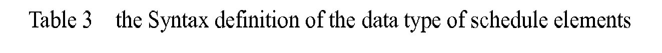

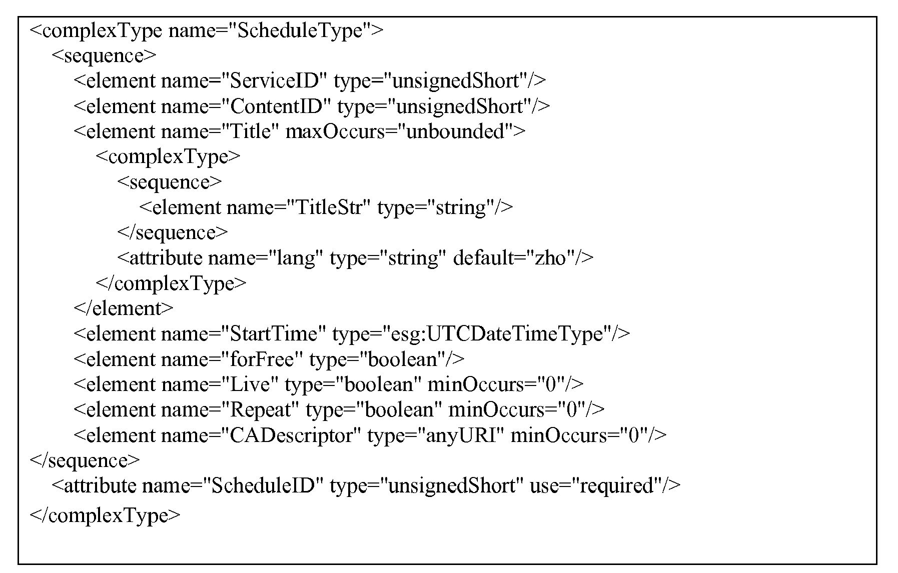

The meanings of respective data types of the schedule elements can found with reference to Table 4.

**Table 4 The semantics of the data types of the schedule elements**

| Field | Semantics |
|---|---|
| ScheduleType | Data type definition of the Schedule elements |
| ServiceID | Service identifier, the attribute of the service elements, a 16-bit unsigned integer, uniquely identifying one service in mobile multimedia broadcast transmission multiplex frames. The service identifier assignment information can be found with reference to Appendix A for the regulation. |
| ContentID | Content identifier, a 16-bit unsigned integer, globally unique. |
| Title | Title elements |
| TitleStr | Title strings indicating the name of the program content being played. |
| lang | The language attributes of the title elements, String, employing a 3-letter language code according to Standard GB/T 4880.2/T-2000, such as, a 3-letter code "zho" in Chinese. |
| StartTime | Start time |
| UTCDate Time Type | Data type definition of the start time element, employing UTC format. |
| forFree | Free indication, Boolean type, "true" indicates free of charge, "false" indicates charge. |
| Live | Live broadcast indication, Boolean type, wherein, "true" indicates live broadcast , "false" indicates recorded video. |
| Repeat | Playback indication, Boolean type, wherein, "true" indicates rebroadcasting, "false" indicates first-run. |
| CADescnptor | Cipher code acquisition descriptor for future extending definition. |
| ScheduleID | Schedule indentifier, the attribute of the schedule elements, a 16-bit unsigned integer, globally unique. |

Further partitioning and numbering rules for the data blocks are not under the consideration of the present invention. Thus, data block partitioning for each piece of schedule information is more reasonable and exactly corresponds to the scheduled time periods, which is helpful for the terminal to realize the ESG data updating operation conveniently.

When receiving the ESG data information, the terminal can determine whether to receive and update the local ESG data information according to the version numbers of respective data blocks in the basic description table. If it needs to receive and update, the schedule data partitioned by the above method reduce the data amount to be received and updated, and it is easier for the terminals to receive completely and to update the ESG data. Especially, the present invention has substantial advantages in a common case that part of the schedule data information changes while the majority does not change.

Based on the description above, the present invention provides a method for updating and transmitting the ESG schedule information in mobile multimedia broadcast system. Especially when the data amount of the ESG schedule information is relatively large, the method according to the present invention is helpful for the terminal to realize the update operation of the ESG data conveniently.

Above description is to illustrate the preferred embodiments but not to limit the present invention. Various alterations and changes to the present invention are apparent to those skilled in the art. The scope defined in claims shall comprise any modification, equivalent substitution and improvement within the spirit and principle of the present invention.

## Claims

1. A method for updating and transmitting Electronic Service Guide (ESG), **characterized by**, comprising the following steps:
step 1, constructing an ESG data block according to a predefined rule, and establishing a data block identifier corresponding to the ESG data block;
step 2, adding description information of the ESG data blocks to an ESG basic description table; and
step 3, upon transmitting the ESG data block, finding an ESG service identifier corresponding to the ESG data block from the ESG basic description table, and transmitting the ESG data block via a service multiplex subframe corresponding to the ESG service identifier.

2. The method according to Claim 1, **characterized in that** the predefined rule comprises ESG data types.

3. The method according to Claim 2, **characterized in that** if the ESG data is schedule information, the predefined rule is start time information of the ESG schedule information.

4. The method according to Claim 1, **characterized in that** the ESG schedule information has a corresponding schedule information type identifier.

5. The method according to Claim 1, **characterized in that** the description information of the ESG data block comprises: an ESG data type identifier, an ESG schedule information data block identifier, an ESG data block version number and the ESG service identifier, wherein,
the ESG data type identifier represents the type of the ESG data,
the ESG service identifier represents the identifier of the ESG service, for the assigning rule complying with the multiplexing regulation.,
the ESG schedule information data block version number represents the current version number of the ESG schedule information data block, and when the ESG schedule information data block is updated, the ESG schedule information data block version number is incremented by 1,
the ESG schedule information data block identifier together with the schedule information type identifier uniquely determines one ESG schedule information data block.

6. The method according to Claim 1, **characterized in that** the service multiplex frame is a multiplex frame with a non-zero multiplex frame identifier in mobile multimedia broadcast channel frames.

7. The method according to Claim 6, **characterized in that** the multiplex subframe of the service multiplex frame is consisted of a subframe head, a video segment, an audio segment, and a data segment, wherein,
the data segment comprises a data segment head and a plurality of data units, the data segment head describing the parameter of each data unit.

8. The method according to Claim 7, **characterized in that** the data unit is consisted of a data head, a data payload and cyclic redundancy code verification data.

9. The method according to Claim 8, **characterized in that** the data head comprises the schedule information type identifier and the ESG schedule information data block identifier corresponding to the data payload.

10. The method according to anyone of Claims 1-9, **characterized in that** the ESG data is the ESG schedule information.
